# EUROPÄISCHE PATENTSCHRIFT

(11) **EP 3 772 778 B1**
(45) Veröffentlichungstag und Bekanntmachung des Hinweises auf die Patenterteilung: **23.10.2024**
(21) Anmeldenummer: 19190667.6
(22) Anmeldetag: 08.08.2019
(51) Int. Cl.: H02G 3/32, H01R 9/24, H01R 9/26, H01R 4/64, H01R 13/58, H01R 4/48, H01R 25/14, H01R 13/6582

(54) **TRÄGERSYSTEM ZUR BEFESTIGUNG EINES LÄNGLICHEN GEGENSTANDS SOWIE SPANGENAUFSATZ**
SUPPORT SYSTEM FOR ATTACHING AN ELONGATED OBJECT AND CLIP ATTACHMENT
SYSTÈME PORTEUR PERMETTANT DE FIXER UN OBJET OBLONG AINSI QU'ÉLÉMENT RAPPORTÉ FORMANT AGRAFE

(43) Veröffentlichungstag der Anmeldung: 10.02.2021
(73) Patentinhaber: HEBOTEC GmbH, 72116 Mössingen (DE)
(72) Erfinder: Hermann, Gerold, 72108 Rottenburg-Obernau (DE); Böhringer, Markus, 72131 Ofterdingen (DE)
(74) Vertreter: Kohler Schmid Möbus Patentanwälte

(56) Entgegenhaltungen:
- EP-A1- 2 654 128
- DE-A1- 102018 203 554

## Beschreibung

Die Erfindung geht aus von einem Trägersystem zur Befestigung eines länglichen Gegenstands an einer Trägerschiene, umfassend eine Spange zur Befestigung des Trägersystems an der Trägerschiene und einen Spangenaufsatz gemäß dem Oberbegriff von Anspruch 1.

Ein solches Trägersystem ist beispielsweise aus der DE 20 2015 100 063 U1 bekannt, deren Lehre hiermit durch Bezugnahme eingebunden sein soll.

Mittels dieses Trägersystems kann ein länglicher Gegenstand, hier insbesondere ein geschirmtes Kabel, an einer Trägerschiene, insbesondere an einer Hutschiene, befestigt werden. Dazu weist das Trägersystem eine Schirmklammer auf, die den Gegenstand bzw. das Kabel an seiner Schirmung kontaktiert. Ferner weist das bekannte Trägersystem einen Zugentlastungsabschnitt auf, mittels der das Kabel einseitig zugentlastet werden kann. Dazu ist es vorgesehen, das Kabel beispielsweise mit einem Kabelbinder im Bereich des Zugentlastungsabschnitts zu umschlingen und dadurch zu fixieren.

Wird das Kabel am nicht zugentlasteten Ende einer Zugkraft ausgesetzt, so kann sich diese Zugkraft jedoch bis in den Bereich der Schirmklammer bzw. des entsprechenden Abschnitts am Kabel auswirken.

Ein Trägersystem gemäß dem Oberbegriff von Anspruch 1 ist aus der DE 10 2018 205 554 A1 bekannt.

Die EP 2 654 128 A1 offenbart eine Befestigungsvorrichtung, die einen Träger umfasst, an dem eine Klammer zur klemmenden Halterung eines Gegenstands fixiert ist, der an einer Stromschiene anordenbar ist.

Aufgabe der vorliegenden Erfindung ist es daher, ein Trägersystem sowie einen Spangenaufsatz anzubieten, die einen verbesserten Schutz eines an dem Trägersystem befestigten länglichen Gegenstands ermöglichen.

Die Aufgabe wird gelöst durch ein Trägersystem mit den Merkmalen des Patentanspruchs 1.

Die Trägerschiene kann als Hutschiene ausgebildet sein und/oder eine solche aufweisen.

Erfindungsgemäß ist es somit vorgesehen, mehrere Möglichkeiten für eine Zugentlastung des Gegenstands bereitzustellen. Somit kann der Gegenstand durch Zugentlastung vor mehreren unterschiedlichen Belastungen, insbesondere vor Zugkräften aus mehreren Richtungen, geschützt werden.

Der Gegenstand kann beispielsweise ein Kabel, ein Rohr, ein Steckverbinder oder dergleichen sein. Bei einem solchen Gegenstand kann die Zugentlastung dadurch erfolgen, dass der Gegenstand mit jeweils einem oder mehreren Kabelbindern an vorzugsweise jedem der Zugentlastungsabschnitte fixiert wird.

Das Trägersystem kann mehrteilig ausgebildet sein. Insbesondere können die Spange und der Spangenaufsatz als zwei verschiedene Bauteile ausgebildet sein. Alternativ ist es auch denkbar, das Trägersystem einteilig auszubilden. Dazu können die Spange und der Spangenaufsatz als Abschnitte eines einzigen Bauteils ausgebildet sein.

Die Spange ist zur klemmenden Befestigung an der Trägerschiene ausgebildet. Der Spangenaufsatz kann als Adapter ausgebildet sein, an dem ein oder mehrere weitere Bauteile, beispielsweise eine Schirmklemme, befestigbar sind.

Die Spange kann eine Auflagefläche zur Auflage des Spangenaufsatzes und/oder eines anderen Bauteils aufweisen. Die Auflagefläche kann eben gebildet sein. Die Auflagefläche kann einen Großteil der Oberfläche der Spange, beispielsweise mehr als 50 %, insbesondere mehr als 90 %, umfassen. Die Auflagefläche kann insbesondere als Kontaktfläche ausgebildet sein. Eine solche große, ebene Kontaktfläche eignet sich besonders zur Ableitung von hochfrequenten Störströmen oder dergleichen.

In analoger Weise kann auch der Spangenaufsatz eine große Auflagefläche aufweisen. Auch seine Auflagefläche kann als Kontaktfläche ausgebildet sein. Auch sie kann eben sein. Auch sie kann wenigstens 50 % der Oberfläche des Spangenaufsatzes, bevorzugt wenigstens 90 % des Spangenaufsatzes, umfassen.

Allgemein kann der Spangenaufsatz zur mittelbaren und/oder unmittelbaren Befestigung des Gegenstands am Trägersystem eingerichtet sein.

Die Spange und/oder der Spangenaufsatz können eine längliche Form aufweisen.

Das Trägersystem kann eine Schirmklammer umfassen. Beispielsweise kann die Schirmklammer auf dem Spangenaufsatz montiert und/oder montierbar sein. Insbesondere kann die Schirmklammer entlang einer Längsrichtung des Spangenaufsatzes mittig auf diesem angeordnet und/oder anordenbar sein. Somit kann der Gegenstand beidseits der Schirmklammer zugentlastet werden bzw. sein.

Die Schirmklammer kann eingerichtet sein, eine Schirmung des Gegenstands, insbesondere elektrisch leitend, zu kontaktieren. Dazu kann die Schirmklammer aus einem leitenden Material, insbesondere einem Federstahl, ausgebildet sein. Sie kann wenigstens zwei Arme aufweisen, die eingerichtet sind, die Schirmung zu umklammern.

Bevorzugt können die Spange und/oder der Spangenaufsatz symmetrisch ausgebildet sein. Beispielsweise können die Spange und/oder der Spangenaufsatz spiegel- oder punktsymmetrisch ausgebildet sein. Von "symmetrisch" können auch lediglich im Wesentlichen symmetrisch ausgebildete Formen mitumfasst sein. Beispielsweise kann ein Schriftzug, ein Logo oder dergleichen bei der Beurteilung einer Symmetrie unbeachtlich sein. Allgemein kann zur Beurteilung lediglich auf die technisch bedingten Merkmale der Form des jeweiligen Bauteils abgestellt werden. Bei der Montage eines solchen symmetrisch ausgebildeten Bauteils ist es nicht erforderlich, eine Montageausrichtung zu beachten.

Die Spange kann ein Befestigungsmittel, insbesondere eine Befestigungsöffnung, zur Befestigung des Spangenaufsatzes und/oder des Gegenstands aufweisen. Vorzugsweise kann an der Spange eine Befestigungsöffnung sein. Am Spangenaufsatz kann ebenfalls eine Befestigungsöffnung sein. Die Befestigungsöffnung kann am Spangenaufsatz vorzugsweise nach Montage deckungsgleich zur Befestigungsöffnung der Spange angeordnet sein. Denkbar ist auch, dass das Befestigungsmittel als Gewindebohrung, als ein oder mehrere Löcher für einen oder mehrere Nieten, als Rastelement, als Rastausnehmung zur Ausbildung eines Formschlusses und/oder als, vorzugsweise stiftförmige, Erhebung ausgebildet ist. Mit einer Schraube, einem Stift, einem Niet oder dergleichen kann dann der Spangenaufsatz an der Spange festgelegt werden.

Insbesondere kann ein Querschnitt des Befestigungsmittels wenigstens zwei unterschiedlich lange Durchmesser aufweisen. Dies bedeutet, dass der Querschnitt des Befestigungsmittels nicht kreisförmig ausgebildet ist. Das Befestigungsmittel, insbesondere wenn es als Befestigungsöffnung ausgebildet ist, kann beispielsweise eine augen- und/oder schlitzförmige Form aufweisen.

Bei einer besonders bevorzugten Ausgestaltung der Erfindung weist die Spange wenigstens drei, vorzugsweise in einer Reihe angeordnete, Befestigungsmittel zur Befestigung des Spangenaufsatzes und/oder des Gegenstands auf. Insbesondere kann die Spange wenigstens drei Befestigungsöffnungen aufweisen. Somit lässt sich der Spangenaufsatz und/oder die Schirmklammer an unterschiedlichen Positionen relativ zur Spange montieren. Der Versatz der Befestigungsmittel zueinander kann mindestens der Breite des Gegenstands und/oder mindestens der Breite der Schirmklammer entsprechen. Wenigstens eine der drei Befestigungsöffnungen kann der Länge der Spange nach außermittig an der Spange positioniert sein. Insbesondere kann die Schirmklammer auch außermittig der Spange montiert sein. Dadurch lassen sich mehrere Trägersysteme dichter beieinander anordnen, da die auf den verschiedenen Trägersystemen montierten Gegenstände aneinander vorbeigeführt werden können.

Die Spange und/oder der Spangenaufsatz können eine Ausrichthilfe zur selbsttätigen Ausrichtung und/oder Positionierung des Spangenaufsatzes und/oder des Gegenstands relativ zur Spange aufweisen. Die Ausrichthilfe kann dazu als wenigstens ein Vorsprung, wenigstens eine Rastausnehmung oder allgemein als wenigstens eine Unebenheit an der Spange und/oder an dem Spangenaufsatz ausgebildet sein. Die Ausrichthilfe kann durch zueinander komplementär ausgebildete Strukturen des Spangenaufsatzes und der Spange ausgebildet sein.

Vorzugsweise kann die Ausrichthilfe von dem Befestigungsmittel beabstandet sein. Dann lässt sich beispielsweise der Spangenaufsatz auf der Spange mittels des Befestigungsmittels befestigen. Dabei können die zueinander komplementär ausgebildeten Strukturen ineinandergreifen und vorzugsweise miteinander verrasten. Somit können sich die Ausrichtung und/oder die Position des Spangenaufsatzes relativ zur Spange während der Montage des Spangenaufsatzes auf der Spange selbsttätig einstellen.

Die Spange, der Spangenaufsatz und/oder die Schirmklammer können aus elektrisch leitendem Material, insbesondere aus einem Federstahl, ausgebildet sein und/oder ein solches Material aufweisen. Besonders bevorzugt weisen alle drei Bauteile ein solches Material auf. Somit lässt sich eine elektrisch leitende Verbindung zwischen dem Gegenstand, insbesondere einer Schirmung des Gegenstands, und der Trägerschiene herstellen. Anforderungen bezüglich einer elektromagnetischen Verträglichkeit (EMV) können somit erfüllt werden.

Die Spange ist als Rastvorrichtung zur werkzeugfreien Befestigung an der Trägerschiene ausgebildet und/oder weist eine solche Rastvorrichtung auf. Dazu kann sie wenigstens eine, bevorzugt zwei, insbesondere elastisch verformbare, Befestigungslaschen aufweisen.

Das Trägersystem, insbesondere die Spange, lässt sich dann von der Trägerschiene wieder auf besonders einfache Weise lösen, wenn die Spange wenigstens eine Lösehilfe zur Lösung der Spange von der Trägerschiene aufweist. Die Lösehilfe kann vorzugsweise als Langloch und/oder als Schlitz an wenigstens einer der Befestigungslaschen der Spange ausgebildet sein.

Eine besonders schnelle und einfache Befestigung des Gegenstands am Trägersystem lässt sich erreichen, wenn wenigstens einer der Zugentlastungsabschnitte eine selbsttätige Zugentlastungsvorrichtung aufweist. Somit ist es nicht mehr erforderlich, den Gegenstand mithilfe eines oder mehrerer Kabelbinder an dem Zugentlastungsabschnitt zu fixieren.

Die Zugentlastungsvorrichtung kann dazu beispielsweise als an dem jeweiligen Zugentlastungsabschnitt angeformter Halteclip, insbesondere mit einer oder mehreren federelastisch verformbaren Haltezungen, ausgebildet sein. Die Haltezungen können nach Art einer Klammer selbsttätig gegeneinanderpressend ausgebildet sein.

Denkbar ist, dass die Spange und/oder der Spangenaufsatz eingerichtet sind, unterschiedliche Schirmklammern und/oder ein oder mehrere weitere, von der Schirmklammer verschiedene Bauteile aufzunehmen. Günstig ist es dazu, wenn die Spange und/oder der Spangenaufsatz in ihren Abmessungen, insbesondere in ihrer Breite, besonders bevorzugt in der Breite der jeweiligen Auflagefläche, an die an ihnen zu montierenden Bauteile anpassbar und/oder angepasst sind. Eine solche Anpassung lässt sich insbesondere während der Konstruktion und/oder während der Fertigung der Spange und/oder des Spangenaufsatzes realisieren.

In den Rahmen der Erfindung fällt des Weiteren ein Spangenaufsatz für ein erfindungsgemäßes Trägersystem, wobei der Spangenaufsatz wenigstens zwei Zugentlastungsabschnitte aufweist. Die Zugentlastungsabschnitte können entlang einer Längsrichtung des Spangenaufsatzes jeweils in einem Endbereich des Spangenaufsatzes ausgebildet sein.

Der Spangenaufsatz kann zur Montage auf der Spange des Trägersystems eingerichtet sein. Insbesondere kann der Spangenaufsatz symmetrisch ausgebildet sein, sodass sich der Spangenaufsatz auf einer Spange ohne Beachtung einer speziellen Montageausrichtung montieren lässt.

Weitere Merkmale und Vorteile der Erfindung ergeben sich aus der nachfolgenden detaillierten Beschreibung der Ausführungsbeispiele der Erfindung, anhand der Figuren der Zeichnung, die erfindungswesentliche Einzelheiten zeigt, sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1: ein Trägersystem in einer perspektivischen Darstellung von schräg oben;
- Fig. 2: das Trägersystem in einer perspektivischen Darstellung von unten;
- Fig. 3: das Trägersystem in einer Draufsicht;
- Fig. 4: ein alternatives Trägersystem in einer Draufsicht;
- Fig. 5: eine Spange in einer Draufsicht;
- Fig. 6: eine weitere Spange in einer perspektivischen Darstellung von schräg oben;
- Fig. 7: die Spange gemäß Fig. 6 in einer Draufsicht;
- Fig. 8: die Spange gemäß Fig. 6 in einer Seitenansicht;
- Fig. 9: eine weitere Spange in einer Draufsicht;
- Fig. 10: eine weitere Spange in einer perspektivischen Darstellung von schräg oben;
- Fig. 11: die Spange gemäß Fig. 10 in einer Draufsicht;
- Fig. 12: die Spange gemäß Fig. 10 in einer an Seitenansicht;
- Fig. 13: einen Spangenaufsatz in einer perspektivischen Darstellung von schräg vorn;
- Fig. 14: den Spangenaufsatz gemäß Fig. 13 in einer Seitenansicht;
- Fig. 15: den Spangenaufsatz gemäß Fig. 13 in einer Schnittansicht und
- Fig. 16: der Spangenaufsatz gemäß Fig. 13 in einer Draufsicht.

Im Folgenden werden zur Erleichterung des Verständnisses der Erfindung für funktional sich entsprechende Elemente Bezugszeichen mit jeweils gleichen Bezugsziffern, gegebenenfalls um Minuskeln ergänzt, verwendet.

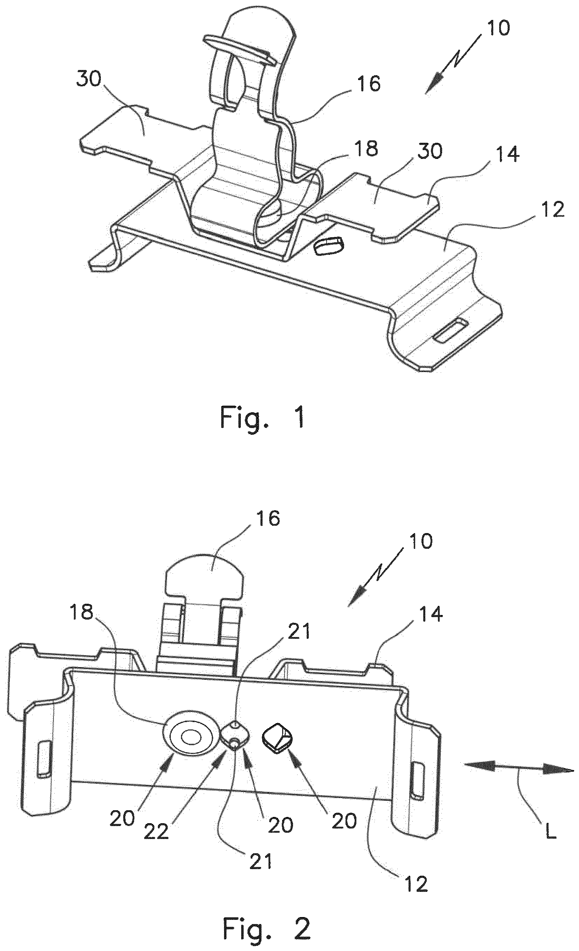

**Fig. 1** zeigt ein erstes Trägersystem **10** zur Befestigung eines länglichen Gegenstands (nicht dargestellt), beispielsweise eines geschirmten Kabels, an einer Trägerschiene (nicht dargestellt) in einer perspektivischen Darstellung von schräg vorn. Dabei kann die Trägerschiene insbesondere eine Hutschiene sein.

Das Trägersystem 10 umfasst eine Spange **12** zur Befestigung des Trägersystems 10 an der Trägerschiene und einen Spangenaufsatz **14.** Wie noch weiter unten näher erläutert wird, weist der Spangenaufsatz 14 zwei Zugentlastungsabschnitte **30** zur wenigstens zweifachen Zugentlastung des Gegenstands auf.

Auf dem Spangenaufsatz 14 ist ferner eine Schirmklammer **16** zur Befestigung des Gegenstands am Trägersystem 10 angeordnet. Die Schirmklammer 16 ist dazu mittels eines Niets **18** über den Spangenaufsatz 14 an der Spange 12 befestigt.

In der perspektivischen Darstellung von unten gemäß **Fig. 2** ist zu erkennen, dass die Spange 12 des Trägersystems 10 drei Befestigungsöffnungen **20** aufweist. Die drei Befestigungsöffnungen 20 sind in einer Reihe entlang einer Längsrichtung L der Spange 12 angeordnet.

In die mittlere der drei Befestigungsöffnungen 20 ragt eine, zwei voneinander beabstandete Vorsprünge **21** aufweisende, Ausrichthilfe **22** des Spangenaufsatzes 14 hinein. Die Ausrichthilfe 22 weist eine an die Befestigungsöffnungen 20 angepasste Größe auf. Insbesondere ist der Abstand der beiden Vorsprünge 21 zueinander auf die Größe der Befestigungsöffnungen 20 angepasst. Durch die Ausrichthilfe 22 richtet sich der Spangenaufsatz 14 während seiner Montage bzw. Befestigung auf der Spange 12 mittels des Niets 18 selbsttätig parallel zur Längsrichtung L der Spange 12 aus.

Die Schirmklammer 16 und der Spangenaufsatz 14 sind mittels des Niets 18 in der gemäß Fig. 2 linken Befestigungsöffnung 20 montiert. Somit sind die Schirmklammer 16 und der Spangenaufsatz 14 relativ zur Spange 12 entlang der Längsrichtung L außermittig angeordnet.

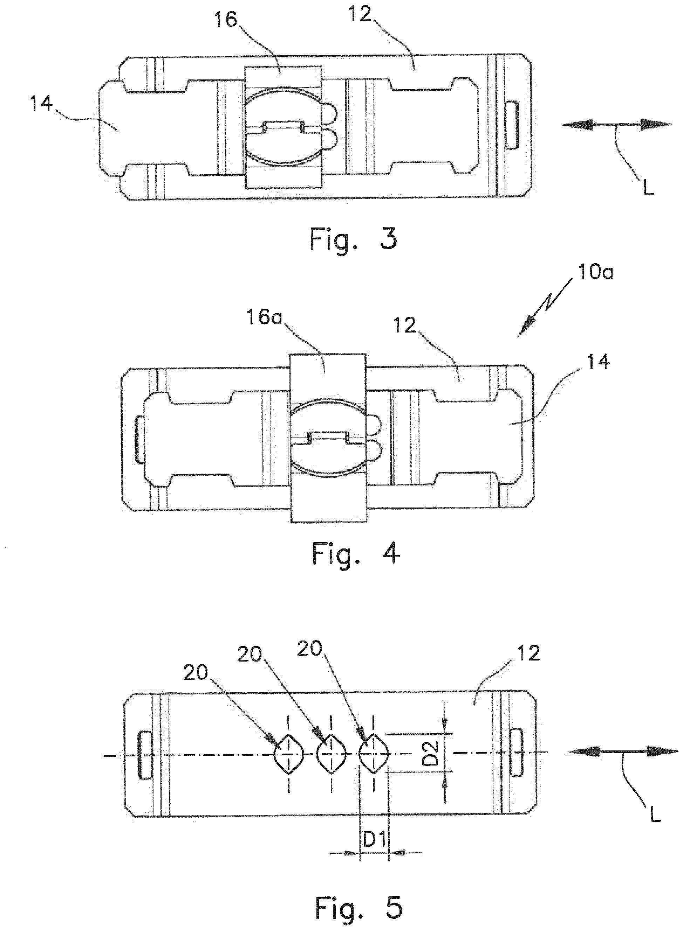

Diese außermittige Anordnung ist auch in der Draufsicht gemäß **Fig. 3** erkennbar. Insbesondere ist zu erkennen, dass der Spangenaufsatz 14 entlang der Längsrichtung L auf der linken Seite über die Spange 12 hinausragt.

Die Schirmklammer 16 weist eine geringere Breite auf als die Spange 12. Alternativ ist denkbar, dass die Schirmklammer 16 seitlich bündig mit der Spange 12 abschließt.

Ein alternatives Trägersystem **10a** ist in **Fig. 4** in einer Draufsicht abgebildet. Bei diesem Trägersystem 10a ist eine Schirmklammer **16a** bezogen auf die Längsrichtung L mittig zur Spange 12 angeordnet. Dazu können die Schirmklammer 16a und der Spangenaufsatz 14 mittels der mittleren Befestigungsöffnung 20 (Fig.2) an der Spange 12 befestigt sein.

Die Schirmklammer 16a entspricht weitgehend der Schirmklammer 16 des vorigen Ausführungsbeispiels gemäß Fig. 1 bis Fig. 3, ist allerdings größer und insbesondere breiter als die Schirmklammer 16. Somit lassen sich mit diesem Trägersystem 10a größere Kabel oder dergleichen an der Schirmklammer 16a bzw. dem Trägersystem 10a fixieren.

Diese Schirmklammer 16a überragt die Spange 12 seitlich.

Auch für die Spange 12 sind unterschiedliche Ausführungsformen denkbar, von denen einzelne mit Bezug auf Fig. 5 bis Fig. 12 näher erläutert werden.

Dazu zeigt zunächst **Fig. 5** in einer Draufsicht die im Trägersystem 10 gemäß Fig. 1 verwendete Spange 12.

Zu erkennen sind die drei Befestigungsöffnungen 20. Eine Besonderheit dieser Befestigungsöffnungen 20 ist, dass diese nicht kreisförmig ausgebildet sind. Stellvertretend ist dabei in Fig. 5 an einer der Befestigungsöffnungen 20 ein Durchmesser **D1** entlang der Längsrichtung L der Spange 12 markiert, der kürzer ist als ein zu dem Durchmesser D1 senkrechter Durchmesser **D2.** Die Befestigungsöffnungen 20 sind somit augenförmig bzw. schlitzförmig ausgebildet. Durch diese Form und insbesondere in Verbindung mit der Ausrichthilfe 22 (Fig. 2) kann sich der Spangenaufsatz 14 (Fig. 1) selbsttätig während seiner Montage auf der Spange 12 (Fig. 1) relativ zu dieser ausrichten. Insbesondere kann er verdrehgesichert an der Spange 12 angeordnet werden.

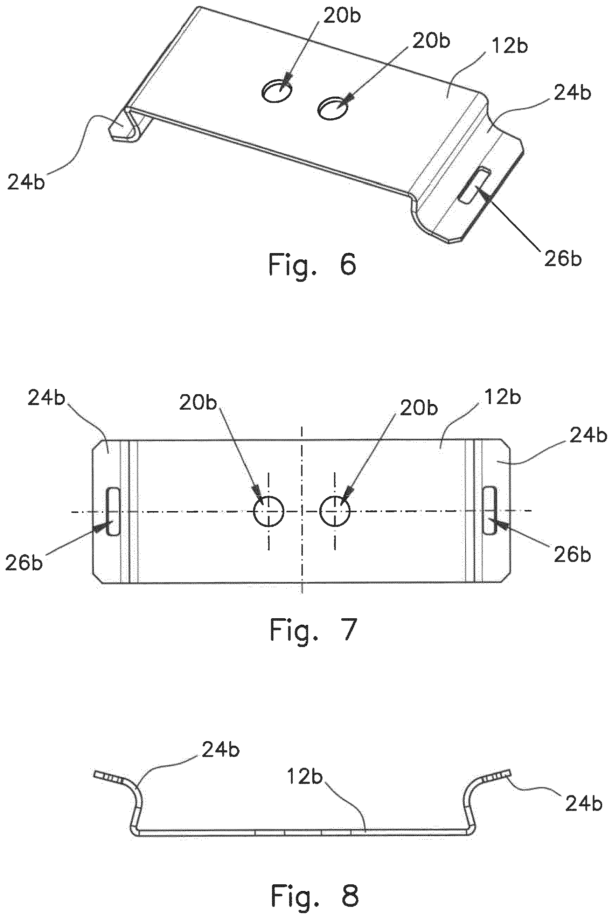

**Fig. 6** zeigt in einer perspektivischen Darstellung von schräg oben eine Spange **12b** mit zwei Befestigungsöffnungen **20b.** Wie auch aus der Draufsicht gemäß **Fig. 7** auf diese Spange 12b erkennbar ist, sind die Befestigungsöffnungen 20b jeweils außermittig der Spange 12b angeordnet.

Vorzugsweise entspricht der Versatz der beiden Befestigungsöffnungen 20b zueinander mindestens der Breite einer jeweils zu montierenden Schirmklammer, beispielsweise der Schirmklammer 16 (Fig. 1) oder der Schirmklammer 16a (Fig. 4). Somit lassen sich mehrere Trägersysteme mit jeweils einer Spange 12b und einer Schirmklammer 16 bzw. 16a dicht nebeneinander anordnen, selbst wenn - wie gemäß Fig. 4 bei der Schirmklammer 16a in Bezug auf die Spange 12 - diese seitlich über die jeweilige Spange 12b hinausragt. In diesem Ausführungsbeispiel beträgt der Versatz zwischen beiden Befestigungsöffnungen 20 zwischen 5 mm und 10 mm, insbesondere 7 mm.

Die Spange 12b weist eine Länge zwischen 40 mm und 50 mm, insbesondere 44 mm und besonders bevorzugt 43,7 mm, auf. Die Abmessungen, insbesondere die Länge, der Spange 12b können auf typische Arten von Trägerschienen, insbesondere auf Hutschienen, abgestimmt sein. Insbesondere können die Spange 12b und/oder allgemein ein mit der Spange 12b ausgerüstetes Trägersystem auf standardisierte Arten von Trägerschienen, insbesondere entsprechend einer der Definitionen der Norm DIN EN 60715:2001-09 und/oder einer entsprechenden Norm, abgestimmt sein. Besonders bevorzugt können die Spange 12b und/oder das Trägersystem auf eine TH35-Hutschiene abgestimmt sein.

An ihren seitlichen Enden weist die Spange 12b jeweils eine Befestigungslasche **24b** auf. Die Spange 12b und damit auch die Befestigungslaschen 24b sind aus einem federelastischen Material, insbesondere aus einem Federstahl, ausgebildet. Die Befestigungslaschen 24b sind - wie auch aus der Seitenansicht gemäß **Fig. 8** ersichtlich - gekrümmt, insbesondere s-förmig gekrümmt. Somit können sie die Trägerschiene hintergreifen. Durch die Elastizität der Spange 12b und insbesondere unterstützt durch die Krümmungen der Befestigungslaschen 24 lässt sich die Spange 12b reversibel aufweiten. Die Spange 12b lässt sich dadurch an der Trägerschiene bzw. an der Hutschiene werkzeuglos befestigen, insbesondere anklipsen und festklemmen. Die Spange 12b ist somit als Rastvorrichtung zur werkzeugfreien Befestigung an der Trägerschiene ausgebildet.

Jede der Befestigungslaschen 24b weist jeweils eine als Langloch ausgebildete Lösehilfe **26b** auf. Um die Spange 12b von der Trägerschiene zu lösen, kann somit ein Schraubendreher oder dergleichen in einer der beiden Lösehilfen 26b angesetzt und die Spange 12b von der Trägerschiene abgehebelt werden.

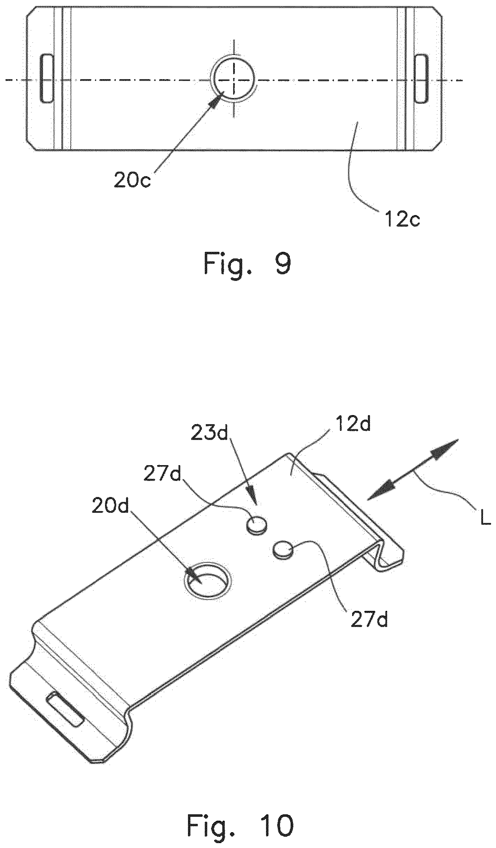

**Fig. 9** zeigt eine weitere, alternative Spange **12c** in einer Draufsicht. Bei dieser Spange 12c ist eine einzige Befestigungsöffnung **20c** vorgesehen. Diese ist mittig an der Spange 12c angeordnet. Sie weist ein Innengewinde, beispielsweise für ein M4- oder ein M5-Gewinde, auf.

Eine weitere, alternative Spange **12d** zeigt **Fig. 10** in einer perspektivischen Darstellung von schräg oben.

Bei dieser Ausführungsform weist die Spange 12d eine Ausrichthilfe **23d** mit zwei Vorsprüngen **27d** auf. Diese Vorsprünge 27d sind stiftförmig und insbesondere durch Prägen der Spange 12d ausgebildet. Wiederum ist eine, insbesondere mittig angeordnete, Befestigungsöffnung **20d** vorgesehen. Die beiden Vorsprünge 27d der Ausrichthilfe 23d sind von dieser Befestigungsöffnung 20d beabstandet. Sie sind sowohl in Längsrichtung L als auch quer zur Längsrichtung L außermittig zur Spange 12d angeordnet.

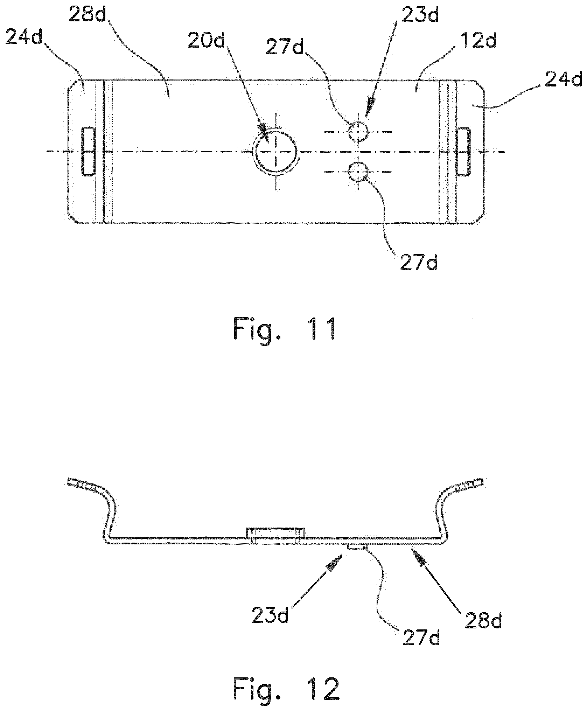

Wie beispielsweise anhand der Draufsicht gemäß **Fig. 11** erkennbar ist, weist die Spange 12d eine Auflagefläche **28d** auf.

Die Auflagefläche 28d ist im Wesentlichen, insbesondere mit Ausnahme der Vorsprünge 27d der Ausrichthilfe 23d, eben. Sie umfasst - abgesehen von den Befestigungslaschen 24d - die gesamte Spange 12d. Damit umfasst sie mehr als 50 % der Oberfläche der Spange 12d.

Die Spange 12d ist aus einem elektrisch leitfähigen Material ausgebildet. Beispielsweise ist sie dazu ebenfalls aus einem Federstahl ausgebildet.

Insbesondere aufgrund der Größe und der Form der Auflagefläche 28d können Störströme, beispielsweise hochfrequente Störströme, über die Auflagefläche 28d, allgemein über die Spange 12d, an eine Trägerschiene, auf der die Spange 12d montiert ist, abgeleitet werden. Besonders vorteilhaft für die Ableitung ist dabei, dass ein auf der Spange 12d montierter Spangenaufsatz großflächig auf der Auflagefläche 28d aufliegen kann.

**Fig. 12** zeigt eine Seitenansicht der Spange 12d gemäß Fig. 10 bzw. Fig. 11. Zu erkennen ist insbesondere, dass die Vorsprünge 27d der Ausrichthilfe 23d von der Auflagefläche 28d abragen. Vorzugsweise beträgt ihre Höhe zwischen 0,3 mm und 0,8 mm und insbesondere 0,5 mm.

Unterschiedliche Merkmale erfindungsgemäßer Spangen sind jeweils bei verschiedenen Ausführungsformen der Spangen 12, 12b, 12c und 12d beschrieben worden. Es versteht sich und ist zumindest teilweise auch aus Fig. 1 bis Fig. 12 erkennbar, dass, soweit nicht bei einer Ausführungsform anders beschrieben, auch die jeweils anderen der Spangen 12, 12b, 12c und 12d das jeweils bei einer Spange beschriebene Merkmal aufweisen oder zumindest aufweisen können. Beispielsweise weisen alle Spangen 12, 12b, 12c und 12d Befestigungslaschen analog zur Befestigungslasche 24b (Fig. 6) auf. Auch können alle Spangen 12, 12b, 12c und 12d der Spange 12b entsprechende Abmessungen aufweisen.

Es versteht sich ferner, dass allgemein die Form der Befestigungsöffnungen unabhängig von der Anzahl der an einer Spange vorgesehenen Befestigungsöffnungen ist. Insbesondere ist denkbar, eine augenförmige Befestigungsöffnung entsprechend der Befestigungsöffnung 20 (Fig. 5) alternativ oder ergänzend zu einer oder mehreren der Befestigungsöffnungen 20b, 20c, 20d der vorigen Ausführungsbeispiele vorzusehen.

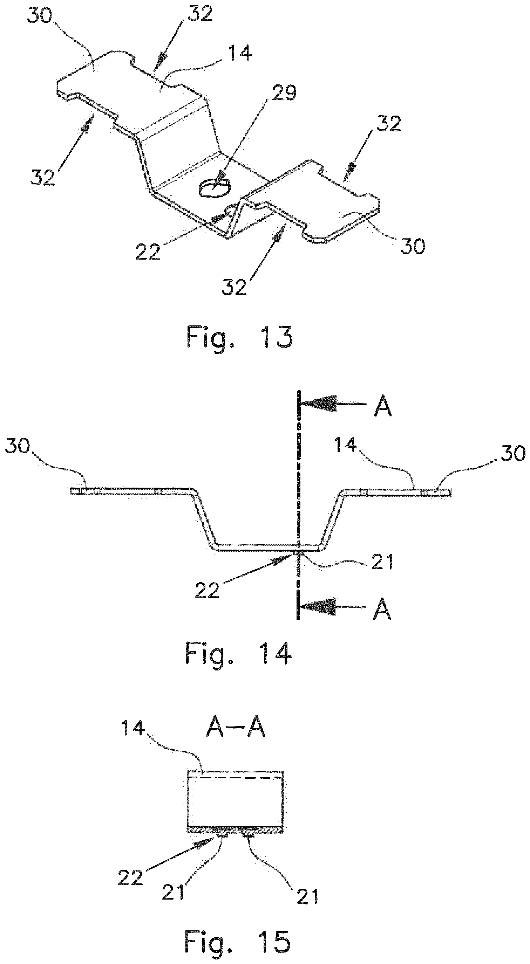

Die folgenden Fig. 13 bis Fig. 16 erläutern als ein Ausführungsbeispiel eines Spangenaufsatzes den Spangenaufsatz 14 gemäß Fig. 1 näher.

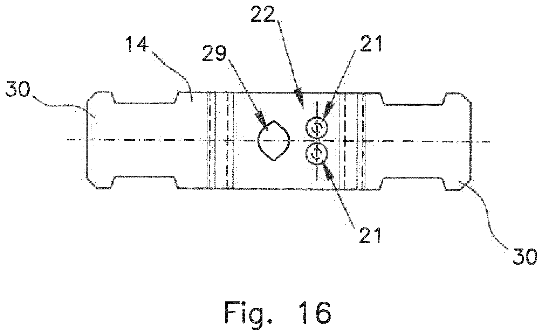

Dazu zeigt **Fig. 13** eine perspektivische Darstellung von schräg vorn, **Fig. 14** eine Seitenansicht, **Fig. 15** eine Schnittansicht gemäß der Schnittlinie **A-A** der Fig. 14 und **Fig. 16** eine Draufsicht auf den Spangenaufsatz 14.

Der Spangenaufsatz 14 weist die zwei Zugentlastungsabschnitte 30 auf. Wie insbesondere in Fig. 13 vermerkt ist, weisen die Zugentlastungsabschnitte 30 jeweils seitliche Führungsausnehmungen **32** für Kabelbinder oder dergleichen auf.

Fig. 14 zeigt, dass die Zugentlastungsabschnitte 30 eben und in derselben Ebene verlaufend ausgebildet sind. Somit lässt sich ein Gegenstand, beispielsweise ein Kabel, auf beide Zugentlastungsabschnitte 30 auflegen.

Mithilfe eines Kabelbinders oder dergleichen kann dann der Gegenstand bzw. das Kabel im Bereich der Führungsausnehmungen 32 jeweils am Spangenaufsatz 14 festgelegt werden. Somit lässt sich der Gegenstand jeweils im Bereich beider Zugentlastungsabschnitte 30 und damit an beiden längsseitigen Enden des Spangenaufsatzes 14 zugentlasten.

Die Führungsausnehmungen 32 dienen dabei dazu, dass der jeweilige Kabelbinder ortsfest am Spangenaufsatz 14 bzw. an dem jeweiligen Zugentlastungsabschnitt 30 angeordnet, insbesondere festgelegt, ist. Ein Abrutschen eines Kabelbinders oder dergleichen vom Spangenaufsatz 14 lässt sich somit selbst bei Belastung des aufgelegten Gegenstands, insbesondere selbst bei auf den Gegenstand wirkenden Zugkräften, verhindern.

Insbesondere anhand von Fig. 14 als auch anhand der Schnittansicht gemäß Fig. 15 ist auch zu erkennen, dass die Vorsprünge 21 der Ausrichthilfe 22 vom Spangenaufsatz 14 abragen.

Wie Fig. 13 und Fig. 16 entnehmbar ist, weist der Spangenaufsatz 14 ferner eine Befestigungsöffnung **29** auf. Diese ist in diesem Ausführungsbeispiel ebenfalls augenförmig ausgebildet. Sie weist damit ebenfalls zwei unterschiedlich lange Durchmesser auf.

Somit lässt sich der Spangenaufsatz 14 auf die Spange 12 (Fig. 1) aufsetzen und mittels der Befestigungsöffnung 20 der Spange 12 (Fig. 2), der Befestigungsöffnung 29 des Spangenaufsatzes 14 und des Niets 18 (Fig. 1) an der Spange 12 festlegen. Die Ausrichthilfe 22 kann dabei mit ihren Vorsprüngen 21 in eine der Befestigungsöffnungen 20 (Fig. 2) der darunterliegenden Spange 12 gleiten und somit den Spangenaufsatz 14 selbsttätig in seiner Ausrichtung und Position relativ zur Spange 12 festlegen.

Alternativ oder ergänzend ist auch denkbar, dass ein Spangenaufsatz komplementär zu einer Ausrichthilfe einer Spange ausgebildet ist. Insbesondere ist denkbar, an einem Spangenaufsatz zu den Vorsprüngen 27d der Ausrichthilfe 23d (Fig. 10) der Spange 12d komplementär ausgebildete Ausnehmungen vorzusehen, so dass sich durch das Zusammenspiel der Vorsprünge 27d mit den komplementär ausgebildeten Ausnehmungen wiederum eine selbsttätige Positionierung und/oder Ausrichtung ergeben.

Ferner ist alternativ oder ergänzend denkbar, dass die Ausrichthilfe des Spangenaufsatzes lediglich einen Vorsprung oder mehr als zwei Vorsprünge, allgemein wenigstens einen Vorsprung, aufweist. Der wenigstens eine Vorsprung kann durch Prägen und/oder durch Abkanten ausgebildet sein. Er kann im Querschnitt kreisförmig sein. Alternativ kann er im Querschnitt nicht kreisförmig sein. Insbesondere kann er als flacher Metallstreifen ausgebildet sein.

Voranstehend sind unterschiedliche Ausführungsformen von Spangen, Spangenaufsätzen sowie Schirmklammern beschrieben worden. Es ist ausdrücklich denkbar, aus diesen Bauteilen in ihren unterschiedlichen Ausführungsformen, insbesondere den Spangen 12, 12b, 12c, 12d, dem Spangenaufsatz 14 und/oder den Schirmklammern 16, 16a, auch in anderen als den voranstehend beschriebenen Kombinationen ein Trägersystem, beispielsweise entsprechend dem Trägersystem 10 gemäß Fig. 1, zu bilden.

Zusammenfassend lässt sich somit ein länglicher Gegenstand, beispielsweise ein geschirmtes Kabel, in einer Schirmklammer, beispielsweise der Schirmklammer 16 (Fig. 1) oder 16a (Fig. 4) aufnehmen. Insbesondere kann die Schirmklammer 16 bzw. 16a eine Schirmung des Gegenstands bzw. Kabels kontaktieren. Beidseits der Schirmklammer 16 bzw. 16a kann der Gegenstand an den Zugentlastungsabschnitten 30 (Fig. 1) des Spangenaufsatzes 14 mithilfe von Kabelbindern oder dergleichen festgelegt werden.

Alle Bauteile des Trägersystems, insbesondere des Trägersystems 10 (Fig. 1) bzw. 10a (Fig. 4) einschließlich der Schirmklammer 16 bzw. 16a, können aus einem elektrisch leitfähigen Material, beispielsweise aus einem Federstahl, gebildet sein. Somit lassen sich etwaige Störströme vom Gegenstand, insbesondere von seiner Schirmung, über das Trägersystem 10 bzw. 10a auf eine Trägerschiene, auf der das Trägersystem 10 bzw. 10a montiert ist, ableiten.

Das Trägersystems 10 bzw. 10a kann werkzeuglos auf der Trägerschiene montiert werden.

Durch die zweiseitige Zugentlastung mittels der Zugentlastungsabschnitte 30 ist der am Trägersystem 10 bzw. 10a festgelegte Gegenstand im Vergleich zu bisher üblichen Trägersystemen gegen unterschiedliche Belastungen, beispielsweise beidseitige Zugkräfte, zusätzlich geschützt.

### Bezugszeichenliste

- 10, 10a: Trägersystem
- 12, 12b, 12c, 12d: Spange
- 14: Spangenaufsatz
- 16, 16a: Schirmklammer
- 18: Niet
- 20, 20b, 20c, 20d: Befestigungsöffnung
- 21: Vorsprung
- 22: Ausrichthilfe
- 23d: Ausrichthilfe
- 24b: Befestigungslasche
- 26b: Lösehilfe
- 27d: Vorsprung
- 28d: Auflagefläche
- 29: Befestigungsöffnung
- 30: Zugentlastungsabschnitt
- 32: Führungsausnehmung
- A-A: Schnittlinie
- D1: Durchmesser
- D2: Durchmesser
- L: Längsrichtung

## Patentansprüche

1. **Trägersystem** (10, 10a) zur Befestigung eines länglichen Gegenstands an einer Trägerschiene, umfassend eine Spange (12, 12b, 12c, 12d) zur Befestigung des Trägersystems (10, 10a) an der Trägerschiene und einen Spangenaufsatz (14), wobei der Spangenaufsatz (14) wenigstens zwei Zugentlastungsabschnitte (30) zur wenigstens zweifachen Zugentlastung des Gegenstands aufweist, **dadurch gekennzeichnet, dass** die Spange (12, 12b, 12c, 12d) als Rastvorrichtung zur werkzeugfreien Befestigung an der Trägerschiene ausgebildet ist und/oder die Spange (12, 12b, 12c, 12d) eine solche Rastvorrichtung aufweist.

2. Trägersystem nach Anspruch 1, **dadurch gekennzeichnet, dass** das Trägersystem eine Schirmklammer (16, 16a) umfasst.

3. Trägersystem nach einem der vorhergehenden Ansprüche, **dadurch gekennzeichnet, dass** die Spange (12, 12b, 12c, 12d) und/oder der Spangenaufsatz (14) symmetrisch ausgebildet sind.

4. Trägersystem nach einem der vorhergehenden Ansprüche, **dadurch gekennzeichnet, dass** die Spange (12, 12b, 12c, 12d) ein Befestigungsmittel, insbesondere eine Befestigungsöffnung (20, 20b, 20c, 20d), zur Befestigung des Spangenaufsatzes (14) und/oder des Gegenstands aufweist.

5. Trägersystem nach Anspruch 4, **dadurch gekennzeichnet, dass** ein Querschnitt des Befestigungsmittels wenigstens zwei unterschiedlich lange Durchmesser (D1, D2) aufweist.

6. Trägersystem nach einem der vorhergehenden Ansprüche, **dadurch gekennzeichnet, dass** die Spange (12, 12b, 12c, 12d) wenigstens drei, vorzugsweise in einer Reihe angeordnete, Befestigungsmittel, insbesondere wenigstens drei Befestigungsöffnungen (20, 20b, 20c, 20d), zur Befestigung des Spangenaufsatzes (14) und/oder des Gegenstands aufweist.

7. Trägersystem nach einem der vorhergehenden Ansprüche, **dadurch gekennzeichnet, dass** die Spange (12, 12b, 12c, 12d) und/oder der Spangenaufsatz (14) eine Ausrichthilfe (22, 23d) zur selbsttätigen Ausrichtung und/oder Positionierung des Spangenaufsatzes (14) und/oder des Gegenstands relativ zur Spange (12, 12b, 12c, 12d) aufweisen.

8. Trägersystem nach einem der vorhergehenden Ansprüche, **dadurch gekennzeichnet, dass** die Spange (12, 12b, 12c, 12d), der Spangenaufsatz (14) und/oder die Schirmklammer (16, 16a) aus elektrisch leitendem Material, insbesondere aus einem Federstahl, ausgebildet sind und/oder ein solches Material aufweisen.

9. Trägersystem nach einem der vorhergehenden Ansprüche, **dadurch gekennzeichnet, dass** die Spange (12, 12b, 12c, 12d) wenigstens eine Lösehilfe (26b) zur Lösung der Spange (12, 12b, 12c, 12d) von der Trägerschiene aufweist.

10. Trägersystem nach einem der vorhergehenden Ansprüche, **dadurch gekennzeichnet, dass** wenigstens einer der Zugentlastungsabschnitte (30) eine selbsttätige Zugentlastungsvorrichtung aufweist.

## Claims

1. **Support system** (10, 10a) for fastening an elongate object to a support rail, comprising a clip (12, 12b, 12c, 12d) for fastening the support system (10, 10a) to the support rail and a clip attachment (14), the clip attachment (14) having at least two strain relief portions (30) for at least two-fold strain relief of the object, **characterized in that** the clip (12, 12b, 12c, 12d) is designed as a snap-in locking device for tool-free fastening to the support rail and/or the clip (12, 12b, 12c, 12d) has such a snap-in locking device.

2. Support system according to claim 1, **characterized in that** the support system comprises a shield clamp (16, 16a).

3. Support system according to either of the preceding claims, **characterized in that** the clip (12,12b, 12c, 12d) and/or the clip attachment (14) are symmetrical.

4. Support system according to any of the preceding claims,
**characterized in that** the clip (12, 12b, 12c, 12d) has a fastening means, in particular a fastening opening (20, 20b, 20c, 20d), for fastening the clip attachment (14) and/or the object.

5. Support system according to claim 4, **characterized in that** a cross section of the fastening means has at least two diameters (D1, D2) of different lengths.

6. Support system according to any of the preceding claims,
**characterized in that** the clip (12, 12b, 12c, 12d) has at least three fastening means, preferably arranged in a row, in particular at least three fastening openings (20, 20b, 20c, 20d), for fastening the clip attachment (14) and/or the object.

7. Support system according to any of the preceding claims,
**characterized in that** the clip (12, 12b, 12c, 12d) and/or the clip attachment (14) have an alignment aid (22, 23d) for the automatic alignment and/or positioning of the clip attachment (14) and/or the object relative to the clip (12, 12b, 12c, 12d).

8. Support system according to any of the preceding claims,
**characterized in that** the clip (12, 12b, 12c, 12d), the clip attachment (14) and/or the shield clamp (16, 16a) are made of electrically conductive material, in particular a spring steel, and/or comprise such a material.

9. Support system according to any of the preceding claims, **characterized in that** the clip (12, 12b, 12c, 12d) has at least one release aid (26b) for releasing the clip (12, 12b, 12c, 12d) from the support rail.

10. Support system according to any of the preceding claims, **characterized in that** at least one of the strain relief portions (30) has an automatic strain relief device.

## Revendications

1. **Système de support** (10, 10a) pour la fixation d'un objet allongé sur un rail de support, comprenant une agrafe (12, 12b, 12c, 12d) pour la fixation du système de support (10, 10a) sur le rail de support et un élément rapporté formant agrafe (14), dans lequel l'élément rapporté formant agrafe (14) présente au moins deux sections de décharge de traction (30) permettant de décharger au moins deux fois la traction de l'objet, **caractérisé en ce que** l'agrafe (12, 12b, 12c, 12d) est conçue comme un dispositif d'encliquetage pour la fixation sans outil sur le rail de support et/ou l'agrafe (12, 12b, 12c, 12d) présente un tel dispositif d'encliquetage.

2. Système de support selon la revendication 1, **caractérisé en ce que** le système de support comprend une pince de blindage (16, 16a).

3. Système de support selon l'une des revendications précédentes, **caractérisé en ce que** l'agrafe (12, 12b, 12c, 12d) et/ou l'élément rapporté formant agrafe (14) sont conçus de manière à être symétriques.

4. Système de support selon l'une des revendications précédentes, **caractérisé en ce que** l'agrafe (12, 12b, 12c, 12d) présente un moyen de fixation, en particulier une ouverture de fixation (20, 20b, 20c, 20d), pour la fixation de l'élément rapporté formant agrafe (14) et/ou de l'objet.

5. Système de support selon la revendication 4, **caractérisé en ce qu'**une section transversale du moyen de fixation présente au moins deux diamètres (D1, D2) de longueurs différentes.

6. Système de support selon l'une des revendications précédentes, **caractérisé en ce que** l'agrafe (12, 12b, 12c, 12d) présente au moins trois moyens de fixation, de préférence disposés en ligne, en particulier au moins trois ouvertures de fixation (20, 20b, 20c, 20d), pour la fixation de l'élément rapporté formant agrafe (14) et/ou de l'objet.

7. Système de support selon l'une des revendications précédentes, **caractérisé en ce que** l'agrafe (12, 12b, 12c, 12d) et/ou l'élément rapporté formant agrafe (14) présentent un moyen d'aide à l'alignement (22, 23d) pour l'alignement et/ou le positionnement automatiques de l'élément rapporté formant agrafe (14) et/ou de l'objet par rapport à l'agrafe (12, 12b, 12c, 12d).

8. Système de support selon l'une des revendications précédentes, **caractérisé en ce que** l'agrafe (12, 12b, 12c, 12d), l'élément rapporté formant agrafe (14) et/ou la pince de blindage (16, 16a) sont réalisés en un matériau électriquement conducteur, en particulier en un acier à ressort, et/ou présentent un tel matériau.

9. Système de support selon l'une des revendications précédentes, **caractérisé en ce que** l'agrafe (12, 12b, 12c, 12d) présente au moins un moyen d'aide au détachement (26b) permettant de détacher l'agrafe (12, 12b, 12c, 12d) du rail de support.

10. Système de support selon l'une des revendications précédentes, **caractérisé en ce qu'**au moins l'une des sections de décharge de traction (30) présente un dispositif de décharge de traction automatique.
